# EUROPEAN PATENT APPLICATION

(11) **EP 4 703 514 A1**
(43) Date of publication of application: **04.03.2026**
(21) Application number: 23940793.5
(22) Date of filing: 27.12.2023
(51) Int. Cl.: D06P 5/30, B41M 5/00, C09D 11/54, D06B 11/00

(54) **INK SET FOR INKJET TEXTILE PRINTING, INKJET TEXTILE PRINTING METHOD, AND INKJET TEXTILE PRINTING DEVICE**

(30) Priority: 06.06.2023 JP 2023092877
(71) Applicant: Kyocera Corporation, Kyoto-shi, Kyoto 612-8501 (JP)
(72) Inventor: SUGIMOTO, Hiroko, Kyoto-shi, Kyoto 612-8501 (JP); HIOKI, Jun, Kyoto-shi, Kyoto 612-8501 (JP)
(74) Representative: Viering, Jentschura & Partner mbB Patent- und Rechtsanwälte
(86) International application number: PCT/JP2023/046876
(87) International publication number: WO 2024/252700

(57) **Abstract**

An ink set for inkjet textile printing includes a pretreatment liquid, ink, and a post-treatment liquid. The pretreatment liquid has a static surface tension higher than a static surface tension of the ink and a static surface tension of the post-treatment liquid.

## Description

### TECHNICAL FIELD

The present invention relates to an ink set for inkjet textile printing, an inkjet textile printing method, and an inkjet textile printing apparatus.

### BACKGROUND OF INVENTION

Example methods for forming images on fabric include screen textile printing and roller textile printing. Screen textile printing involves preparing, for example, a screen frame for each image to be formed, and roller textile printing also involves preparing, for example, an engraved roller for each image to be formed. These textile printing methods are thus unsuitable for, for example, high-mix low-volume production. These textile printing methods can also involve washing off, for example, resist paste and thus discharging a relatively large amount of wastewater. In contrast, inkjet recording can change, for example, patterns and colors simply by changing digital data. Inkjet recording-based textile printing, or specifically, inkjet textile printing, thus involves substantially no process of forming plates such as screen frames and engraved rollers, and can readily allow high-mix low-volume production and discharge notably less wastewater.

Inkjet recording can include ejecting and depositing treatment liquids, in addition to ink, onto a recording medium. More specifically, a pretreatment liquid may be ejected onto a recording medium before ink is ejected, or a post-treatment liquid may be ejected onto a recording medium after ink is ejected. Such inkjet recording for depositing treatment liquids is described in, for example, Patent Literature 1. Patent Literature 1 describes an inkjet recording method that includes ejecting an aqueous colored ink composition from inkjet heads for deposition onto an recording medium made of a mixture of natural and synthetic fibers, depositing a treatment liquid containing an aggregating agent for aggregating components of the aqueous colored ink composition onto a recording surface of the recording medium, and depositing an aqueous clear ink composition containing resin particles onto the recording medium. The method described in Patent Literature 1 produces a recorded material with high wear resistance.

### CITATION LIST

### PATENT LITERATURE

Patent Literature 1: Japanese Unexamined Patent Application Publication No. 2019-142068

### SUMMARY

In one aspect of the present invention, an ink set for inkjet textile printing includes a pretreatment liquid, ink, and a post-treatment liquid. The pretreatment liquid has a static surface tension higher than a static surface tension of the ink and a static surface tension of the post-treatment liquid.

### BRIEF DESCRIPTION OF THE DRAWINGS

FIG. 1 is a schematic diagram of an example inkjet textile printing apparatus using an ink set for inkjet textile printing according to one embodiment of the present disclosure.
FIG. 2 is a perspective view of an overall structure of an inkjet printer that can use the ink set for inkjet textile printing according to one embodiment of the present disclosure.
FIG. 3 is a schematic cross-sectional view taken along line III-III in FIG. 2.
FIG. 4 is an enlarged perspective view of a carriage illustrated in FIG. 2.

### DESCRIPTION OF EMBODIMENTS

One or more embodiments of the present disclosure will now be described. However, the present disclosure is not limited to such embodiments.

### Ink Set for Inkjet Textile Printing

In one embodiment of the present disclosure, an ink set for inkjet textile printing includes a pretreatment liquid, ink, and a post-treatment liquid. The pretreatment liquid has a static surface tension (Spre) higher than the static surface tension of the ink and the static surface tension of the post-treatment liquid. More specifically, the pretreatment liquid has the static surface tension (Spre) higher than the static surface tension (Si) of the ink (Spre > Si). The pretreatment liquid has the static surface tension (Spre) higher than the static surface tension (Spost) of the post-treatment liquid (Spre > Spost). Inkjet textile printing performed with the ink set for inkjet textile printing allows formation of images (or letters as a type of image) on fabric with a sufficiently lower occurrence of bleeding. More specifically, the pretreatment liquid, the ink, and the post-treatment liquid controlled to have the relationship Spre > Si and Spre > Spost can be sequentially ejected on fabric with an inkjet system to effectively reduce occurrence of bleeding of the images formed on the fabric. This can be explained by the phenomenon described below.

With Spre > Si, the ink deposited onto fabric on which the pretreatment liquid is deposited permeates in a thickness direction of the fabric, rather than spreading in a surface direction (horizontal direction) of the fabric, thus reducing occurrence of bleeding. This can be explained by the phenomenon described below. The pretreatment liquid deposited on fabric permeates in the thickness direction (vertical direction) of the fabric. When the ink is deposited onto the fabric in this state, the ink also permeates in the thickness direction of the fabric following the permeation of the pretreatment liquid. The ink can thus permeate in the thickness direction of the fabric, rather than spreading in the surface direction (horizontal direction) of the fabric, thus reducing occurrence of bleeding.

With Spre > Spost, when the post-treatment liquid is deposited onto the fabric in which the pretreatment liquid and the ink are contained, the ink is less likely to spread in the surface direction (horizontal direction) of the fabric, thus reducing occurrence of bleeding. This can be explained by the phenomenon described below. The post-treatment liquid permeates, near the surface of the fabric, in the area containing the mixture of the pretreatment liquid and the ink, following the permeation of the mixture. In contrast, when Spost > Spre, the post-treatment liquid does not mix with the mixture of the pretreatment liquid and the ink, and pushes the mixture and spreads the mixture in the horizontal direction of the fabric, thus causing bleeding. When Spre > Spost, such spread of the mixture in the horizontal direction of the fabric can be reduced, with less occurrence of bleeding.

With the phenomena described above, the ink set for inkjet textile printing including the pretreatment liquid, the ink, and the post-treatment liquid having the relationship Spre > Si and Spre > Spost can be used with the inkjet textile printing method to form images (or letters as a type of image) on fabric with a sufficiently lower occurrence of bleeding.

In the present embodiment, as described above, the ink set for inkjet textile printing includes the pretreatment liquid, the ink, and the post-treatment liquid. An inkjet textile printing method using such an ink set may include, before ejecting the ink, depositing a treatment liquid as the pretreatment liquid onto a fabric. The treatment liquid contains an aggregating agent that forms aggregates with, for example, a color material in the ink. This may increase, for example, the rubbing fastness of the image formed on the fabric. The inkjet textile printing method may also include ejecting, as the post-treatment liquid, a treatment liquid containing, for example, resin particles onto the fabric after depositing the ink. This may increase, for example, fixation of the image formed on the fabric. The deposition of the pretreatment liquid and the post-treatment liquid with the inkjet textile printing method can increase, for example, the rubbing fastness and the fixation of the image formed on the fabric. However, the inkjet textile printing method simply depositing the pretreatment liquid and the post-treatment liquid can cause ink bleeding in the image formed on the fabric through application of the ink. The inkjet textile printing method is thus requested to form images on fabric with less occurrence of bleeding. The ink set including the pretreatment liquid, the ink, and the post-treatment liquid used with the inkjet textile printing method is requested to allow image formation on fabric with a sufficiently lower occurrence of bleeding. In one embodiment of the present disclosure, the ink set for inkjet textile printing meets such a request, or specifically, the ink set allows image formation on fabric with a sufficiently lower occurrence of bleeding.

The difference between Spre and Si, or specifically, the difference resulting from subtraction of Si from Spre (Spre - Si), is greater than 0. To more effectively reduce occurrence of bleeding, for example, the difference may be 0.5 to 5.5 mN/m inclusive, or specifically 0.5 to 4.5 mN/m inclusive.

The difference between Spre and Spost, or specifically, the difference resulting from subtraction of Spost from Spre (Spre - Spost), is greater than 0. To more effectively reduce occurrence of bleeding, for example, the difference may be, for example, 1 to 10 mN/m inclusive.

The difference between Si and Spost may be any value that satisfies the relationship Spre > Si and Spre > Spost, and may be, for example, 0 to 5 mN/m inclusive, or specifically 0 to 3 mN/m inclusive, to further reduce occurrence of bleeding. The difference resulting from subtraction of Spost from Si (Si - Spost) may be, for example, -3 to 5 mN/m inclusive, or specifically 0.5 to 3 mN/m inclusive, to reduce occurrence of bleeding. The static surface tension (Si) of the ink may be higher than the static surface tension (Spost) of the post-treatment liquid (Si > Spost) to more effectively reduce occurrence of bleeding. In this case, Si - Spost is greater than 0. The upper limit of such a value may be, for example, 5 mN/m or less, or specifically 3 mN/m or less.

The static surface tension may be, for example, a static surface tension at 25 °C, or more specifically, the value measured by the Wilhelmy method at a measurement environment of 25 °C, for example. The static surface tension measurement by the Wilhelmy method may be performed using, for example, an automatic surface tensiometer (DY-300 manufactured by Kyowa Interface Science Co., Ltd.).

The fabric is a printing substrate used with an inkjet textile printing method. Examples of the fabric include a fiber-containing product and a product made of fiber. Examples of the fabric include woven fabric, knitted fabric, non-woven fabric, and braided fabric. Examples of the fiber include natural fibers such as cotton, silk, wool, and hemp, chemical fibers such as polyester, acrylic, polyurethane, polyamide, rayon, cupra, and acetate, and blended fibers of these. The fabric may include one of these types of fibers or may include two or more of these fibers in combination. More specifically, the fabric may be, for example, cotton, silk, linen, polyester, acetate, rayon, polyamide, or polyurethane. The fabric may be polyester tropical fabric, which is plain-woven fabric made of polyester threads. The fabric may be one of these types or a combination of two or more of these types.

### Pretreatment Liquid

The pretreatment liquid is ejected and deposited onto fabric, which is a printing substrate, before the ink is ejected onto the fabric. The pretreatment liquid may be any liquid that can be used as a pretreatment liquid for an inkjet textile printing method and has a static surface tension (Spre) satisfying the above relationship (Spre > Si and Spre > Spost). The pretreatment liquid may contain, for example, a cationic compound. The cationic compound contained in the pretreatment liquid reacts and aggregates with a color material such as a pigment contained in the ink to be ejected, thus allowing the color material to fully develop its color. The pretreatment liquid may contain an aqueous medium as a main component (e.g., 50 mass% or greater) and may contain a surfactant as appropriate.

The cationic compound may be any cationic compound that can aggregate the color material contained in the ink upon contact. Examples of the cationic compound include cationic polymers such as an ammonium-containing polymer, an amine-containing polymer, polyallylamine, polyvinylamine, polyimine, polyvinylpyrrolidone, polyethylenimine, polyvinylpyridine, aminoacetalized polyvinyl alcohol, an ionene polymer, polyvinyl imidazole, polyvinyl benzylphosphonium, polyalkyl allyl ammonium, polyamidine, and polyamine sulfone. The cationic polymer may be water-soluble. In other words, the cationic polymer may be a water-soluble cationic polymer. To achieve still higher color development, the cationic compound may be, among the above examples, a quaternary ammonium-containing polymer, a diallyldimethylammonium sulfur dioxide copolymer, a diallyldimethyl ammonium chloride acrylamide copolymer, a diallyldimethylammonium chloride polymer, a dimethylamine-ammonia-epichlorohydrin polycondensate, or a dimethylamine-ammonia-epichlorohydrin polycondensate. One of these compounds may be used alone, or two or more of these may be used in combination.

The cationic compound may have a weight-average molecular weight of, but not limited to, 1000 to 10000 inclusive to improve ejection through inkjet heads.

Although the content of the cationic compound relative to the total amount of the pretreatment liquid is not limited, the lower limit may be, for example, 0.3 mass% or greater, specifically 0.5 mass% or greater, or more specifically 1 mass% or greater to increase the color development (optical density). The upper limit of the cationic compound content may be 35 mass% or less, specifically 29.5 mass% or less, or more specifically 20 mass% or less.

The pretreatment liquid may contain an aqueous medium as a main component (e.g., 50 mass% or greater). For example, the remaining portion of the pretreatment liquid other than the cationic compound and the surfactant (described later) may be an aqueous medium.

The aqueous medium contained in the pretreatment liquid may be any medium containing water. For example, the aqueous medium may contain water as a main component (e.g., 50 mass% or greater) or may be water. The aqueous medium may function as a solvent or a dispersion medium in the pretreatment liquid. The water content relative to the aqueous medium is, for example, 50 mass% or greater, specifically 90 mass% or greater, or more specifically 100 mass%. The aqueous medium may contain water and further an organic solvent. In other words, the aqueous medium may be an aqueous medium containing water and an organic solvent. For the aqueous medium containing an organic solvent, the content of the organic solvent relative to the total amount of the pretreatment liquid is, for example, 3 to 50 mass% inclusive to provide a dry-resistant pretreatment liquid having viscosity for stable ejection.

Examples of the organic solvent include a glycol compound, an alcohol compound (e.g., a polyhydric alcohol), an ether compound (e.g., an ether compound of a polyhydric alcohol), a nitrogen-containing compound, a sulfur-containing compound, an aliphatic hydrocarbon, a ketone compound, an ester compound, a vegetable oil, and alkylene carbonate.

Examples of the glycol compound include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol.

Examples of the polyhydric alcohol include a diol compound with five to eight carbon atoms (first diol compound), a diol compound with two to four carbon atoms (second diol compound), 1,2,6-hexanetriol, glycerin, trimethylolpropane, a sugar alcohol (e.g., xylitol), and sugars (e.g., xylose, glucose, and galactose).

Examples of the first diol compound include 2-methylpentane-2,4-diol, triethylene glycol, tetraethylene glycol, 1,5-pentane diol, and 1,2-hexanediol.

Examples of the second diol compound include ethylene glycol, 1,2-propanediol, 1,3-propanediol, butylene glycol, and diethylene glycol.

Examples of the alcohol compound other than the polyhydric alcohol include methanol, ethanol, isopropanol, butanol, and benzyl alcohol.

Examples of the ether compound include an ether compound of a polyhydric alcohol. Examples of the ether compound of a polyhydric alcohol include a glycol ether compound and an ethylene oxide adduct of diglycerin. Examples of the glycol ether compound include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol diethyl ether, diethylene glycol diethyl ether, triethylene glycol monomethyl ether, triethylene glycol monoethyl ether, triethylene glycol monobutyl ether, propylene glycol monomethyl ether, propylene glycol monobutyl ether, and dipropylene glycol monobutyl ether.

Examples of the nitrogen-containing compound include a lactam compound, 1,3-dimethylimidazolidinone, formamide, dimethylformamide, and triethanolamine. Examples of the lactam compound include pyrrolidone such as 2-pyrrolidone, N-methyl-2-pyrrolidone, cyclohexylpyrrolidone, and N-methyl-2-pyrrolidone.

Examples of the sulfur-containing compound include thiodiethanol, thiodiglycerol, sulfolane, and dimethyl sulfoxide.

Examples of the aliphatic hydrocarbon include a straight-chain hydrocarbon, an isoparaffinic hydrocarbon, and a naphthenic hydrocarbon.

Examples of the ketone compound include methyl ethyl ketone.

Examples of the ester compound include an acetate compound such as diethylene glycol monoethyl ether acetate.

Examples of the vegetable oil include oils such as soybean oil, linseed oil, rice bran oil, tung oil, castor oil, dehydrated castor oil, corn oil, safflower oil, Jatropha curcas oil, regenerated vegetable oil, canol oil, rapeseed oil, tung oil, peanut oil, cottonseed oil, sesame oil, sunflower oil, olive oil, palm oil, palm kernel oil, and coconut oil, and thermally polymerized oils and oxidative polymerized oils of the listed oils.

Examples of the alkylene carbonate include propylene carbonate and ethylene carbonate.

The organic solvent may be, among the organic solvents described above, a glycol compound. One of the listed organic solvents may be used alone, or two or more of the organic solvents may be used in combination.

The content of the aqueous medium relative to the total amount of the pretreatment liquid is not limited, and may be the remaining portion (the remaining portion of the pretreatment liquid other than the non-aqueous components, such as the cationic compound and the surfactant described later). The content of the aqueous medium may be, for example, 5 to 70 mass% inclusive, or specifically 10 to 60 mass% inclusive.

The pretreatment liquid may contain a surfactant for, for example, adjusting the surface tension. The pretreatment liquid containing a surfactant also has higher wettability for fabric as a recording substrate. The surfactant may be one of, but is not limited to, a nonionic surfactant, a cationic surfactant, an anionic surfactant, or an amphoteric surfactant. The HLB of the surfactant may be any value, but may be, for example, 3 to 20 inclusive, specifically 6 to 16 inclusive, or more specifically 7 to 10 inclusive to allow the tension Spre to easily satisfy the above relationship (Spre > Si and Spre > Spost). The HLB value of the surfactant is calculated with, for example, the Griffin's method using the formula "HLB = 20 × (the sum of formula weights of hydrophilic portions)/molecular weight".

Examples of the nonionic surfactant include a silicone surfactant, such as polyether modified silicone, and an acetylene glycol surfactant, such as an ethylene oxide adduct of acetylene diol.

Examples of the cationic surfactant include a quaternary ammonium surfactant and an amine surfactant.

Examples of the anionic surfactant include a carboxylic acid surfactant, a carboxylate surfactant, and a sulfate ester salt surfactant.

Examples of the amphoteric surfactant include a carboxylate amphoteric surfactant, a sulfate ester salt amphoteric surfactant, a sulfonate amphoteric surfactant, and a phosphate ester salt amphoteric surfactant.

One of the listed surfactants may be used alone, or two or more of the surfactants may be used in combination.

The surfactant may be a nonionic surfactant to allow Spre to easily satisfy the above relationship (Spre > Si and Spre > Spost). The surfactant may be an acetylene glycol surfactant or an ethylene oxide adduct of acetylene diol to allow Spre to easily satisfy the above relationship (Spre > Si and Spre > Spost). The surfactant may be a silicone surfactant or a polyether modified silicone to allow Spre to easily satisfy the above relationship (Spre > Si and Spre > Spost).

The content of the surfactant relative to the total amount of the pretreatment liquid is not limited, but may be, for example, 0.05 to 5 mass% inclusive, or specifically 0.1 to 5 mass% inclusive, to more effectively reduce occurrence of bleeding. The content of the surfactant may more specifically be 0.7 to 1.1 mass% inclusive to allow Spre to satisfy the above relationship (Spre > Si and Spre > Spost) and more effectively reduce occurrence of bleeding.

The static surface tension (Spre) of the pretreatment liquid may be any value that satisfies the above relationship (Spre > Si and Spre > Spost). The upper limit of Spre may be, for example, 45 mN/m or less, specifically 40 mN/m or less, or more specifically 39 mN/m or less. The lower limit of Spre may be, for example, 24 mN/m or greater, specifically 25 mN/m or greater, or more specifically 32 N/m or greater.

The static surface tension (Spre) of the pretreatment liquid may be adjusted by changing, for example, the composition of the pretreatment liquid. More specifically, the tension Spre may be adjusted by changing the type or the content of the surfactant contained in the pretreatment liquid. The ink set for inkjet textile printing may have Spre adjusted in any manner to satisfy the above relationship (Spre > Si and Spre > Spost).

The pretreatment liquid may further contain known additives (specifically, a solubility stabilizer, an anti-drying agent, an antioxidant, a viscosity modifier, a pH adjuster, an antifungal agent, and other additives) as appropriate.

The pretreatment liquid is prepared by mixing, for example, with an agitator, the cationic compound, the aqueous medium, and components (e.g., a surfactant) optionally added as appropriate. The mixing time is not limited and may be, for example, 1 to 30 minutes inclusive.

### Ink

The ink may be any ink that can be used with inkjet textile printing and has a static surface tension (Si) satisfying the above relationship (Spre > Si). The ink may contain a color material and an aqueous medium. The ink may contain at least one selected from the group consisting of binder resin particles and a surfactant as appropriate.

The color material may be any color material contained in ink for inkjet textile printing, and may be, for example, a pigment. The pigment may be, for example, a dispersible pigment dispersed in an aqueous medium such as water. The pigment may have a volume-median diameter (D₅₀) of 30 to 250 nm inclusive, or specifically 70 to 160 nm inclusive, to provide ink with high optical density, high color hue, and color stability. The volume median diameter (D₅₀) is measured with a laser diffraction-scattering particle size distribution analyzer (e.g., LA-950 manufactured by Horiba, Ltd.).

The pigment may be any pigment that allows formation of intended images (shows a color constituting intended images), such as known organic pigments and inorganic pigments. Examples of the organic pigments include azo pigments, polycyclic pigments, nitro pigments, nitroso pigments, and aniline black. Examples of the azo pigments include azo lake pigments, insoluble azo pigments, condensed azo pigments, and chelate azo pigments. Examples of the polycyclic pigments include phthalocyanine pigments, perylene pigments, anthraquinone pigments, quinacridone pigments, dioxazine pigments, thioindigo pigments, isoindolinone pigments, and quinophthalone pigments. Examples of the inorganic pigments include carbon blacks such as acetylene black and lamp black.

The pigments may be classified by color. Examples of the pigments include a yellow pigment, an orange pigment, a red pigment, a blue pigment, a green pigment, and a black pigment.

Examples of the yellow pigment include C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 95, C.I. Pigment Yellow 109, C.I. Pigment Yellow 110, Pigment Yellow 120, C.I. Pigment Yellow 128, C.I. Pigment Yellow 138, C.I. Pigment Yellow 139, C.I. Pigment Yellow 151, C.I. Pigment Yellow 154, C.I. Pigment Yellow 155, C.I. Pigment Yellow 173, C.I. Pigment Yellow 180, C.I. Pigment Yellow 185, and C.I. Pigment Yellow 193.

Examples of the orange pigment include C.I. Pigment Orange 31, C.I. Pigment Orange 34, C.I. Pigment Orange 36, C.I. Pigment Orange 43, C.I. Pigment Orange 61, C.I. Pigment Orange 63, and C.I. Pigment Orange 71.

Examples of the red pigment include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 150, C.I. Pigment Red 166, C.I. Pigment Red 177, C.I. Pigment Red 178, C.I. Pigment Red 202, and C.I. Pigment Red 222.

Examples of the blue pigment include C.I. Pigment Blue 15, C.I. Pigment Blue 15:2, C.I. Pigment Blue 15:3, and C.I. Pigment Blue 16.

Examples of the green pigment include C.I. Pigment green 7.

Examples of the black pigment include C.I. Pigment Black 7.

The color material may be one of the pigments or a combination of two or more of the pigments.

The pigment may be an anionic pigment for the following reasons when the ink is used with the pretreatment liquid as in the present embodiment. The anionic pigment aggregates, on a surface of the recording medium, with the cationic compound contained in the pretreatment liquid through ionic bonding. The anionic pigment aggregates with the cationic compound to reduce permeation of the binder resin particles (described later) contained in the ink into the recording medium. This is effective particularly for the recording medium that is fabric, preventing the binder resin particles from permeating into the gaps between fiber filaments of the fabric and binding the filaments to each other. This can improve the texture (e.g., the fabric hand) of the fabric as a printing substrate.

Examples of the anionic pigment include a pigment having an anion group such as a carboxy group, a sulfonic acid group, a phosphoric acid group, a phosphonic acid group, a phenylphosphonic acid group, or a phenylcarboxy group (a pigment in which an anion group is introduced).

The content of the color material (pigment) relative to the total amount of the ink is not limited, but may be, for example, 1 to 12 mass% inclusive, or specifically 1 to 7 mass% inclusive, to increase the optical density while maintaining high ink flowability. Ink with a higher color material (pigment) content (e.g., 1 mass% or greater) tends to increase optical density. Ink with a lower color material (pigment) content (e.g., 12 mass% or less) has high flowability.

The aqueous medium contained in the ink may be any medium containing water. For example, the aqueous medium in the ink may be the same as or similar to the aqueous medium contained in the pretreatment liquid. For example, the organic solvent and the content of the organic solvent may also be the same as or similar to those in the aqueous medium contained in the pretreatment liquid. For the ink containing the organic solvent, the content of the organic solvent relative to the total amount of the ink may be, for example, 3 to 50 mass% inclusive to provide a dry-resistant ink having viscosity for stable ejection. The aqueous medium may function as a solvent or a dispersion medium in the ink. The content of the aqueous medium relative to the total amount of the ink is not limited, and may be the remaining portion (the remaining portion of the ink other than the non-aqueous components, such as the color material, the binging resin particles described later, and the surfactant described later). The content of the aqueous medium may be, for example, 5 to 70 mass% inclusive, or specifically 10 to 60 mass% inclusive.

The ink may contain binder resin particles for, for example, increasing image fixation. The binder resin particles may be dispersed in the aqueous medium. The binder resin particles may function as a binder that binds fabric as a printing substrate to a color material such as a pigment. The ink containing the binder resin particles can thus provide a printed textile on which images are more stably fixed.

Examples of a resin contained in the binder resin particles include, but are not limited to, a urethane resin, an acrylic resin, a methacrylic resin, a styrene-acrylic acid copolymer, a styrene-methacrylic acid copolymer, a styrene-maleic acid copolymer, a vinyl naphthalene-acrylic acid copolymer, a vinyl naphthalene-methacrylic acid copolymer, and a vinyl naphthalene-maleic acid copolymer. The resin contained in the binder resin particles may be, among the listed resins, a urethane resin. The content of the urethane resin in the binder resin particles may be 80 mass% or greater or may be 100 mass%. In other words, the binder resin particles may be particles of a urethane resin.

The content of the binder resin particles relative to the total amount of the ink is not limited, but may be, for example, 1 to 20 mass% inclusive, or specifically 2 to 10 mass% inclusive, to increase image fixation while maintaining stable ink ejection. Ink with a higher content of the binder resin particles (e.g., 1 mass% or greater) tends to increase image fixation. Ink with a lower content of the binder resin particles (e.g., 20 mass% or less) can be ejected stably.

The ink may contain a surfactant for, for example, adjust the surface tension. The ink containing a surfactant also has higher wettability for fabric as a recording substrate. The surfactant may be one of, but is not limited to, a nonionic surfactant, a cationic surfactant, an anionic surfactant, or an amphoteric surfactant. The HLB of the surfactant may be any value, but may be, for example, 3 to 20 inclusive, specifically 6 to 16 inclusive, or more specifically 7 to 10 inclusive to allow the tension Si to easily satisfy the above relationship (Spre > Si). The surfactant may be, for example, the same as or similar to the surfactant contained in the pretreatment liquid. The surfactant may be a nonionic surfactant to allow Si to easily satisfy the above relationship (Spre > Si). The surfactant may be an acetylene glycol surfactant or an ethylene oxide adduct of acetylene diol to allow Si to more easily satisfy the above relationship (Spre > Si). The surfactant may be a silicone surfactant or polyether modified silicone to allow Si to more easily satisfy the above relationship (Spre > Si).

The content of the surfactant relative to the total amount of the ink is not limited, but may be, for example, 0.06 to 5 mass% inclusive, specifically 0.1 to 5 mass% inclusive, or 0.5 to 2 mass% inclusive to further reduce occurrence of bleeding. The content of the surfactant may more specifically be 0.7 to 1.4 mass% inclusive to allow Si to more easily satisfy the above relationship (Spre > Si) and reduce occurrence of bleeding more effectively.

The ink has any static surface tension (Si) that satisfies the above relationship (Spre > Si). The upper limit of Spre may be, for example, 38 mN/m or less, specifically 37 mN/m or less, or more specifically 34.5 mN/m or less. The lower limit of Si may be, for example, 20 mN/m or greater, specifically 21 mN/m or greater, or more specifically 28 mN/m or greater.

The static surface tension (Si) of the pretreatment liquid may be adjusted by, for example, changing the composition of the ink. More specifically, Si may be adjusted by changing the type or the content of the surfactant contained in the ink. The ink set for inkjet textile printing may have Si adjusted in any manner to satisfy the above relationship (Spre > Si and Spre > Spost).

The ink may further contain known additives (specifically, a solubility stabilizer, an anti-drying agent, an antioxidant, a viscosity modifier, a pH adjuster, an antifungal agent, and other additives) as appropriate.

The ink is prepared by mixing, for example, with an agitator, the color material (pigment), the aqueous medium, and components (e.g., binder resin particles, and a surfactant) optionally added as appropriate. The mixing time is not limited and may be, for example, 1 to 30 minutes inclusive.

### Post-Treatment Liquid

The post-treatment liquid is ejected and deposited onto fabric as a printing substrate after the ink is deposited on the fabric. The post-treatment liquid may be any liquid that can be used as a post-treatment liquid for inkjet textile printing and has a static surface tension (Spost) satisfying the above relationship (Spre > Spost). The post-treatment liquid may contain, for example, an emulsion of a silicone oil. The post-treatment liquid containing the emulsion of the silicone oil increases the smoothness of the fabric surface and the rubbing fastness. The post-treatment liquid may contain an aqueous medium as a main component (e.g., 50 mass% or greater) and may contain a surfactant as appropriate.

The silicone oil may be, but is not limited to, dimethyl silicone oil, amino group-containing silicone oil, carboxyl group-containing silicone oil, phenolic hydroxy group-containing silicone oil, silanol group-containing silicone oil, epoxy group-containing silicone oil, mercapto group-containing silicone oil, phenyl group-containing silicone oil, or long chain alkyl group-containing silicone oil. The emulsion of the silicone oil may contain one of these silicone oils alone or a combination of two or more of these silicone oils. The emulsion of the silicone oil may be one type of emulsion or a combination of two or more types of emulsions.

The content of the silicone oil emulsion relative to the total amount of the post-treatment liquid is not limited, but may be 1 to 35 mass% inclusive to increase rubbing fastness.

The aqueous medium contained in the post-treatment liquid may be any medium containing water. For example, the aqueous medium contained in the post-treatment liquid may also be the same as or similar to the aqueous medium contained in the pretreatment liquid and the ink. For example, the organic solvent and the content of the organic solvent in the aqueous medium may be the same as or similar to those in the aqueous medium contained in the pretreatment liquid and the ink. For the post-treatment liquid containing the organic solvent, the content of the organic solvent relative to the total amount of the ink may be 3 to 50 mass% inclusive to provide a dry-resistant post-treatment liquid having viscosity for stable ejection. The aqueous medium may function as a solvent or a dispersion medium in the post-treatment liquid. The content of the aqueous medium relative to the total amount of the post-treatment liquid is not limited, and may be the remaining portion of the post-treatment liquid other than, for example, the emulsion of the silicone oil. The content of the aqueous medium relative to the total amount of the post-treatment liquid may be, for example, 50 to 90 mass% inclusive, or specifically 55 to 70 mass% inclusive.

The post-treatment liquid may contain a surfactant for, for example, adjusting the surface tension. The post-treatment liquid containing a surfactant also has higher wettability for fabric as a recording substrate. The surfactant may be one of, but is not limited to, a nonionic surfactant, a cationic surfactant, an anionic surfactant, or an amphoteric surfactant. The HLB of the surfactant may be any value, but may be, for example, 3 to 20 inclusive, specifically 6 to 16 inclusive, or more specifically 7 to 10 inclusive to allow the tension Spost to easily satisfy the above relationship (Spre > Spost). The surfactant may be, for example, the same as or similar to the surfactant contained in the pretreatment liquid and the ink. The surfactant may be a nonionic surfactant to allow Spost to easily satisfy the above relationship (Spre > Spost). The surfactant may be an acetylene glycol surfactant or an ethylene oxide adduct of acetylene diol to allow Spost to more easily satisfy the above relationship (Spre > Spost). The surfactant may be a silicone surfactant or polyether modified silicone to allow Spost to more easily satisfy the above relationship (Spre > Spost).

The content of the surfactant relative to the total amount of the post-treatment liquid is not limited, but may be, for example, 0 to 5 mass% inclusive, or specifically 0.1 to 5 mass%, to more effectively reduce occurrence of bleeding. The content of the surfactant may more specifically be 0 to 1.1 mass% inclusive to allow Spost to satisfy the above relationship (Spre > Spost) and more effectively reduce occurrence of bleeding.

The static surface tension (Spost) of the post-treatment liquid may be any value that satisfies the above relationship (Spre > Spost). The upper limit of Spost may be, for example, 38 mN/m or less, specifically 37 mN/m or less, or more specifically 31 mN/m or less. The lower limit of the Spost may be, for example, 20 mN/m or greater, specifically 21 mN/m or greater, or more specifically 24 N/m or greater.

The static surface tension (Spost) of the post-treatment liquid may be adjusted by changing, for example, the composition of the post-treatment liquid. More specifically, Spost may be adjusted by changing the type or the content of the surfactant contained in the post-treatment liquid. The ink set for inkjet textile printing may have Spost adjusted in any manner to satisfy the above relationship (Spre > Si and Spre > Spost).

The post-treatment liquid may further contain known additives (specifically, a solubility stabilizer, an anti-drying agent, an antioxidant, a viscosity modifier, a pH adjuster, an antifungal agent, and other additives) as appropriate.

The post-treatment liquid is prepared by mixing, for example, with an agitator, the emulsion of the silicone oil, the aqueous medium, and components optionally added as appropriate. The mixing time is not limited and may be, for example, 1 to 30 minutes inclusive.

### Ink Set

The ink set for inkjet textile printing includes at least the pretreatment liquid, the ink, and the post-treatment liquid, and may also include, for example, ink or a treatment liquid other than the pretreatment liquid, the ink, and the post-treatment liquid. The ink set for inkjet textile printing may be an ink set of the pretreatment liquid, the ink, and the post-treatment liquid. The ink set for inkjet textile printing allows image formation on fabric with a sufficiently lower occurrence of bleeding when used with an inkjet textile printing method or in an inkjet textile printing apparatus.

### Inkjet Textile Printing Method

The inkjet textile printing method may be any method for forming images on fabric by ejecting (using an inkjet system) the pretreatment liquid, the ink, and the pretreatment liquid included in the ink set for inkjet textile printing onto the fabric. More specifically, the inkjet textile printing method includes, for example, sequentially ejecting the pretreatment liquid, the ink, and the post-treatment liquid onto the fabric. More specifically, in another embodiment of the present disclosure, the inkjet textile printing method first includes ejecting and depositing the pretreatment liquid included in the ink set for inkjet textile printing onto fabric (pretreatment liquid ejection process). The method then includes ejecting and depositing the ink included in the ink set for inkjet textile printing onto the fabric on which the pretreatment liquid is deposited (ink ejection process). The method finally includes ejecting and depositing the post-treatment liquid included in the ink set for inkjet textile printing onto the fabric on which the ink is deposited (post-treatment liquid ejection process). The pretreatment liquid, the ink, and the post-treatment liquid are sequentially ejected onto fabric in the manner described above to form images on the fabric with a sufficiently lower occurrence of bleeding. The inkjet textile printing method may be implemented with, for example, an inkjet textile printing apparatus (described later).

### Inkjet Textile Printing Apparatus

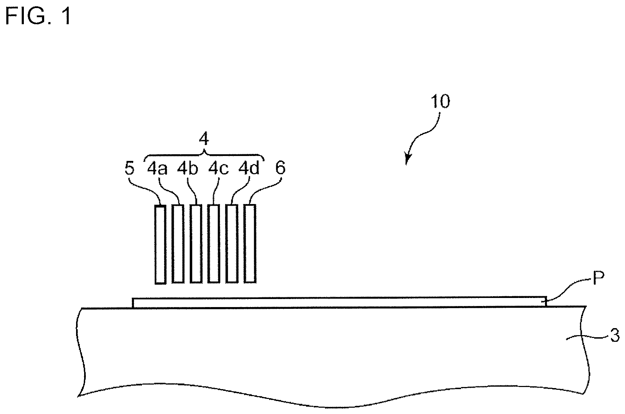

The inkjet textile printing apparatus allows implementation of the inkjet textile printing method. The inkjet textile printing apparatus is any apparatus that can implement the pretreatment liquid ejection process, the ink ejection process, and the post-treatment liquid ejection process. The inkjet textile printing apparatus may be, for example, an inkjet textile printing apparatus that forms an image on fabric by ejecting (using an inkjet system) the pretreatment liquid, the ink, and the post-treatment liquid included in the ink set for inkjet textile printing onto the fabric. In another embodiment of the present disclosure, the inkjet textile printing apparatus includes a pretreatment liquid head that ejects and deposits the pretreatment liquid included in the ink set for inkjet textile printing onto fabric, an ink head that ejects and deposits the ink included in the ink set for inkjet textile printing onto the fabric on which the pretreatment liquid is deposited, and a post-treatment liquid head that ejects and deposits the post-treatment liquid included in the ink set for inkjet textile printing onto the fabric on which the ink is deposited. As described above, the inkjet application apparatus can sequentially eject the pretreatment liquid, the ink, and the post-treatment liquid onto the fabric, forming an image on the fabric with a sufficiently lower occurrence of bleeding. The inkjet textile printing apparatus may be, for example, the inkjet textile printing apparatus illustrated in FIG. 1. FIG. 1 is a schematic diagram of an example of an inkjet textile printing apparatus 10 (in the other embodiment of the present disclosure) using the ink set for inkjet textile printing according to one embodiment of the present disclosure. FIG. 1 illustrates the components schematically. The size and the number of components may be changed as appropriate.

The inkjet textile printing apparatus 10 ejects (using an inkjet system) the pretreatment liquid, the ink, and the post-treatment liquid included in the ink set for inkjet textile printing onto a printing substrate (fabric) P.

As illustrated in FIG. 1, the inkjet textile printing apparatus 10 includes a pretreatment liquid head 5, ink heads 4, a post-treatment liquid head 6, and a support 3. The ink heads 4 may include a first ink head 4a, a second ink head 4b, a third ink head 4c, and a fourth ink head 4d. The pretreatment liquid head 5, the ink heads 4, and the post-treatment liquid head 6 are inkjet heads.

The pretreatment liquid head 5 ejects the pretreatment liquid to at least an image formation area on the printing substrate P. The pretreatment liquid head 5 may be any head, such as a piezoelectric head or a thermal inkjet head. The inkjet textile printing apparatus 10 may include one or more pretreatment liquid tanks (not illustrated) for storing the pretreatment liquid. In this case, the treatment liquid is supplied from the pretreatment liquid tanks to the pretreatment liquid head 5.

The ink heads 4 ejects ink to the image formation area on the printing substrate P. The first ink head 4a, the second ink head 4b, the third ink head 4c, and the fourth ink head 4d included in the ink heads 4 eject different colors of ink (e.g., yellow ink, magenta ink, cyan ink, and black ink). The number of ink heads 4 is not limited to four, but may be one to three or five or more. The ink heads 4 may be any heads, such as piezoelectric heads or thermal inkjet heads. The inkjet textile printing apparatus 10 may include one or more ink tanks (not illustrated) for storing the ink. In this case, the treatment liquid is supplied from the ink tanks to the ink heads 4.

The post-treatment liquid head 6 ejects the post-treatment liquid onto at least the image formation area on the printing substrate P. The post-treatment liquid head 6 may be any head, such as a piezoelectric head or a thermal inkjet head. The inkjet textile printing apparatus 10 may include one or more post-treatment liquid tanks (not illustrated) for storing the post-treatment liquid. In this case, the post-treatment liquid is supplied from the post-treatment liquid tanks to the post-treatment liquid head 6.

The support 3 receives the printing substrate P. The pretreatment liquid head 5, the ink heads 4, and the post-treatment liquid head 6 are arranged above the support 3 to eject the pretreatment liquid, the ink, and the post-treatment liquid onto the printing substrate P. The support 3 is driven by a motor (not illustrated) to move horizontally in a direction from the pretreatment liquid head 5 toward the post-treatment liquid head 6 (e.g., in the right direction in FIG. 1). The support 3 moves horizontally to transport the printing substrate P on the support 3.

The inkjet textile printing method (the production of a printed textile) first includes horizontally moving the support 3 on which the printing substrate P is placed to transport the printing substrate P to a position facing the pretreatment liquid head 5. The pretreatment liquid is ejected from the pretreatment liquid head 5 onto the printing substrate P. The pretreatment liquid head 5 may eject the pretreatment liquid onto the image formation area on the printing substrate P alone, onto an area larger than the image formation area on the printing substrate P, or onto the entire surface of the printing substrate P. The pretreatment liquid head 5 may eject the pretreatment liquid onto the image formation area on the printing substrate P alone to reduce the amount of the pretreatment liquid used and reduce deterioration in the hand of the printed textile.

After the pretreatment liquid is ejected from the pretreatment liquid head 5, the support 3 on which the printing substrate P is placed further moves horizontally to transport the printing substrate P to a position facing the ink heads 4. The ink is then ejected from the ink heads 4 onto the image formation area on the printing substrate P. In this manner, an image is formed with the ink on the image formation area on the printing substrate P.

After the ink is ejected from the ink heads 4, the support 3 on which the printing substrate P is placed further moves horizontally to transport the printing substrate P to a position facing the post-treatment liquid head 6. The post-treatment liquid is ejected from the post-treatment liquid head 6 onto at least the image formation area on the printing substrate P. The post-treatment liquid head 6 may eject the post-treatment liquid onto the image formation area on the printing substrate P alone, onto an area larger than the image formation area on the printing substrate P, or onto the entire surface of the printing substrate P. The post-treatment liquid head 6 may eject the post-treatment liquid onto the image formation area on the printing substrate P alone to reduce the amount of the post-treatment liquid used and reduce deterioration in the hand of the printed textile. In this manner, a treatment film is formed with the post-treatment liquid on the image formed in the image formation area on the printing substrate P.

After the post-treatment liquid is ejected from the post-treatment liquid head 6, the support 3 on which the printing substrate P is placed further moves horizontally to transport the printing substrate P to a position facing a heater (not illustrated) for heating the printing substrate P. The heater heats the printing substrate P to dry the pretreatment liquid, the ink, and the post-treatment liquid. The heating temperature may be any temperature such as 120 to 180 °C inclusive to dry the pretreatment liquid, the ink, and the post-treatment liquid appropriately. The heating time may be any duration such as 1 to 10 minutes inclusive to dry the pretreatment liquid, the ink, and the post-treatment liquid appropriately. The volatile components contained in the pretreatment liquid, the ink, and the pretreatment liquid deposited on the printing substrate P are dried through the heating, facilitating fixation of the pretreatment liquid, the ink, and the post-treatment liquid to the printing substrate P. This forms the printing substrate P (printed textile) including an image formed with the ink and treated with the pretreatment liquid and the post-treatment liquid.

In the inkjet textile printing apparatus 10, for example, the pretreatment liquid head 5, the ink heads 4, and the post-treatment liquid head 6 may move horizontally with the support 3 being stationary, rather than the support 3 moving horizontally as described above.

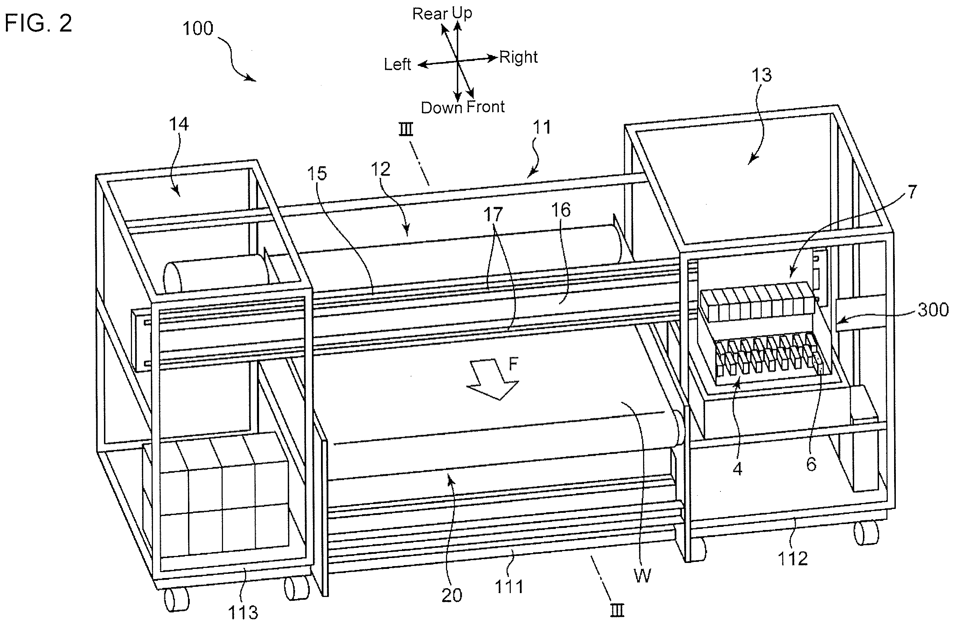

An inkjet recording apparatus as an inkjet textile printing apparatus that can use the ink set for inkjet textile printing will now be described in detail. A specific example of the inkjet recording apparatus described below is an inkjet printer including ink heads that eject ink onto a wide and elongated recording medium. The inkjet printer will now be described with reference to FIGs. 2 to 4.

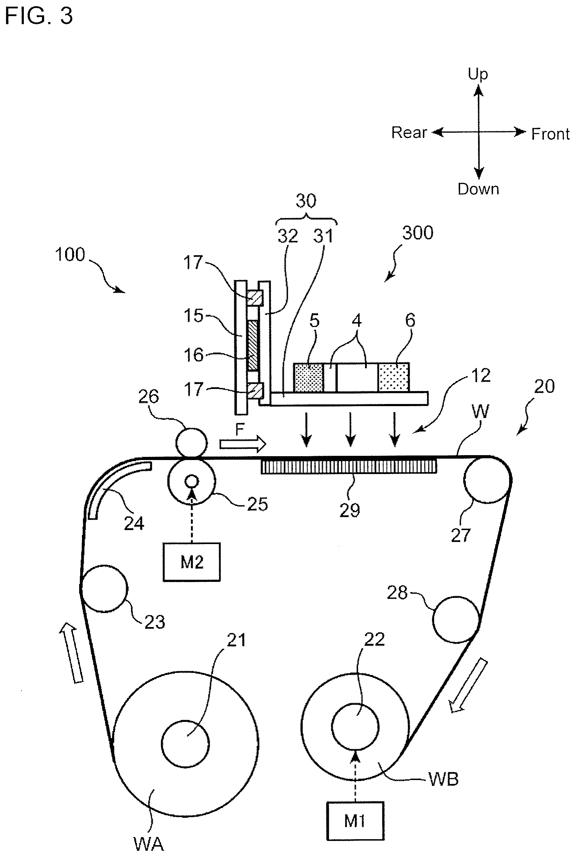

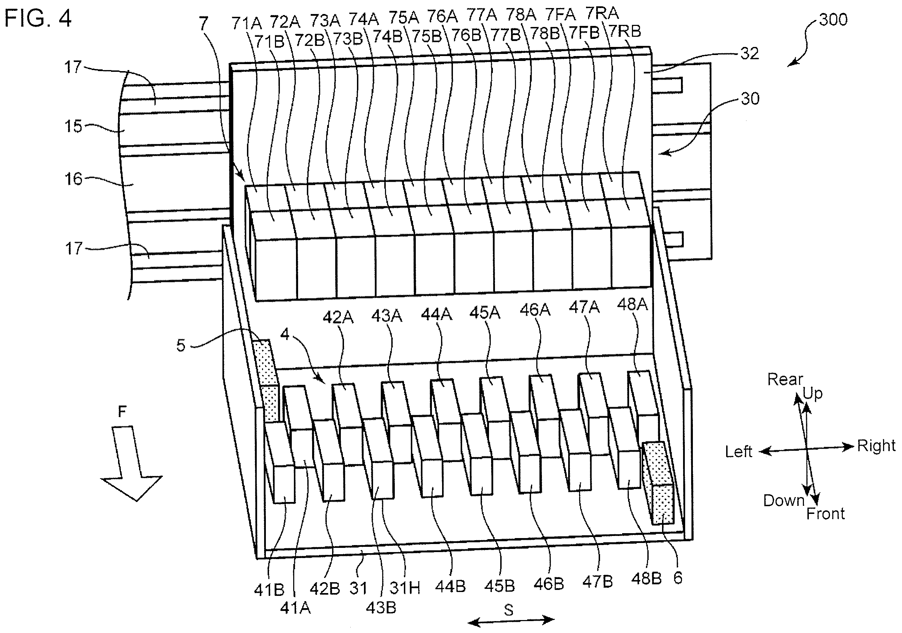

FIG. 2 is a perspective view of the overall structure of an inkjet printer 100 that can use the ink set for inkjet textile printing according to one embodiment of the present disclosure. The inkjet printer 100 prints, with an inkjet system, images such as letters and patterns onto fabric as a printing substrate, and may perform, for example, digital textile printing. The inkjet printer may also print various images on a recording medium such as a paper sheet or a resin sheet, other than on fabric as a printing substrate. FIG. 3 is a schematic cross-sectional view taken along line III-III in FIG. 2. FIG. 4 is an enlarged perspective view of a carriage illustrated in FIG. 2.

The inkjet printer 100 prints images on a wide and elongated workpiece W (recording medium) with an inkjet system. The inkjet printer 100 is also used to form images on a printing substrate, or specifically, fabric as the workpiece W. In other words, the inkjet printer 100 is used as the inkjet textile printing apparatus in the present embodiment. In the present embodiment, the inkjet textile printing apparatus uses fabric as a recording medium, which is also referred to as the workpiece W. The workpiece W has a width of, for example, several meters. As illustrated in FIG. 2, the inkjet printer 100 includes an apparatus frame 11, and a workpiece feeder 20 and a carriage 300 incorporated in the apparatus frame 11. In the present embodiment, a lateral direction is a main scanning direction S (FIG. 4) for printing on the workpiece W, and a direction from the rear to the front is a subscanning direction (a feed direction F of the workpiece W intersecting with the main scanning direction S).

The apparatus frame 11 is a frame on which various components of the inkjet printer 100 are mounted. The workpiece feeder 20 intermittently feeds (transports) the workpiece W, moving the workpiece W in the feed direction F from the rear to the front in a printing area in which an inkjet printing process is performed. The carriage 300 carries the ink heads 4, the pretreatment liquid head 5, the post-treatment liquid head 6, and subtanks 7, and reciprocates in the main scanning direction S (lateral direction) intersecting with the feed direction F of the workpiece W during the inkjet printing process.

The apparatus frame 11 includes a center frame 111, a right frame 112, and a left frame 113. The center frame 111 is a frame on which various components of the inkjet printer 100 are mounted and has a lateral width corresponding to the workpiece feeder 20. The right frame 112 stands on the right of the center frame 111, and the left frame 113 stands on the left of the center frame 111. A printing area 12 in which a printing process is performed on the workpiece W is defined between the right frame 112 and the left frame 113.

The right frame 112 defines a maintenance area 13. The maintenance area 13 is an area into which the carriage 300 is retracted when the printing process is not performed. In the maintenance area 13, nozzles (ejection orifices) of the ink heads 4, the pretreatment liquid head 5, and the post-treatment liquid head 6 are, for example, cleaned or purged, and are also capped. The left frame 113 defines a turn-back area 14 for the carriage 300. The turn-back area 14 is an area for the carriage 300 that has performed the main scanning of the printing area 12 from right to left to temporarily enter before performing the main scanning in the reverse direction during the printing process.

The apparatus frame 11 receives, on its upper portion, a carriage guide 15 for guiding the carriage 300 to reciprocate in the lateral direction. The carriage guide 15 is a flat plate elongated in the lateral direction and is located above the workpiece feeder 20. The carriage guide 15 receives a timing belt 16 rotatable in the lateral direction (main scanning direction). The timing belt 16 is an endless belt drivable to rotate in the left direction or the right direction.

The carriage guide 15 includes a pair of upper and lower guide rails 17 holding the carriage 300 in a manner reciprocable in the main scanning direction S. The pair of guide rails 17 extend parallel to each other in the lateral direction. The carriage 300 is engaged with the guide rails 17. The carriage 300 is fixed to the timing belt 16. In response to rotation of the timing belt 16 in the left direction or the right direction, the carriage 300 moves in the left direction or the right direction along the carriage guide 15 while being guided by the guide rails 17.

FIG. 3 will now be referred to mainly. The workpiece feeder 20 includes a feed roller 21 that unwinds the workpiece W before printing, and a take-up roller 22 that winds the workpiece W after printing. The feed roller 21 is located in a lower rear portion of the apparatus frame 11. The feed roller 21 is a winding shaft of a feed roll WA as a wound roll of the workpiece W before printing. The take-up roller 22 is located in a lower front portion of the apparatus frame 11. The take-up roller 22 is a winding shaft of a take-up roll WB as a wound roll of the workpiece W after the printing process. The take-up roller 22 includes a first motor M1 that rotates the take-up roller 22 about its axis to wind the workpiece W.

A path extending through the printing area 12 between the feed roller 21 and the take-up roller 22 is a feed path of the workpiece W. This feed path includes, in the order from upstream, a first tension roller 23, a workpiece guide 24, a transport roller 25 and a pinch roller 26, a turn roller 27, and a second tension roller 28. The first tension roller 23 applies a predetermined tension to the workpiece W upstream from the transport roller 25. The workpiece guide 24 redirects the workpiece W from upward to frontward and feeds the workpiece W into the printing area 12.

The transport roller 25 generates a feed force for intermittently feeding the workpiece W in the printing area 12. The transport roller 25, which is driven by a second motor M2, rotates about its axis and intermittently feeds the workpiece W frontward (in the predetermined feed direction F) to allow the workpiece W to pass through the printing area 12 (image formation position) facing the carriage 300. The pinch roller 26 faces the transport roller 25 from above and forms a feed nip with the transport roller 25.

The turn roller 27 redirects the workpiece W that has passed through the printing area 12 from frontward to downward, and guides the workpiece W to the take-up roller 22 after the printing process. The second tension roller 28 applies a predetermined tension to the workpiece W downstream from the transport roller 25. A platen 29 is located below the feed path of the workpiece W in the printing area 12.

The carriage 300 reciprocates, while being held by the guide rails 17 in a cantilevered manner, in the main scanning direction S (the lateral direction in FIGs. 2 and 3) intersecting with (perpendicular to in FIGs. 2 and 3) the feed direction F. The carriage 300 includes a carriage frame 30 as well as the ink heads 4, the pretreatment liquid head 5, the post-treatment liquid head 6, and the subtanks 7 mounted on the carriage frame 30 (FIG. 4). The carriage frame 30 includes a head support frame 31 and a back frame 32.

The head support frame 31 is a horizontal plate holding the ink heads 4, the pretreatment liquid head 5, and the post-treatment liquid head 6 described above. The back frame 32 is a vertical plate extending upward from a rear edge of the head support frame 31. As described above, the timing belt 16 is fixed to the back frame 32. The guide rails 17 are engaged with the back frame 32. In other words, the back frame 32 is an engaging portion held by the guide rails 17 in a cantilevered manner in the example in FIG. 3. The head support frame 31 is a horizontal plate including a rear end portion held by the guide rails 17 in a cantilevered manner with the engaging portion.

Note that being held in a cantilevered manner refers to a state in which the engaging portion (back frame 32) in the carriage 300 held by the guide rails 17 as holding members is located either upstream or downstream from the middle of the carriage 300 in the feed direction F, with no other engaging portion in an area opposite to the area including the engaging portion. The engaging portion may also be located outside an area including the ink heads 4, the pretreatment liquid head 5, and the post-treatment liquid head 6 in the feed direction F. In other words, the engaging portion may be located either upstream or downstream from the area including the ink heads 4, the pretreatment liquid head 5, and the post-treatment liquid head 6 in the feed direction F.

The carriage 300 will be described further. FIG. 4 is an enlarged perspective view of the carriage 300 illustrated in FIG. 2. FIG. 4 illustrates the feed direction F (subscanning direction) of the workpiece W and the main scanning direction S in which the carriage 300 moves. In the example illustrated in FIG. 4, the carriage 300 carries multiple ink heads 4 that eject ink onto the workpiece W for image formation, the pretreatment liquid head 5 and the post-treatment liquid head 6 that eject noncolor-developing treatment liquids, and multiple subtanks 7 that supply the ink, the pretreatment liquid, and the post-treatment liquid to the heads 4 to 6.

Each of the ink heads 4 includes many nozzles (ink ejection orifices) and an ink channel that guides ink to the nozzles. The nozzles eject ink droplets by, for example, piezoelectric ejection using piezoelectric elements or thermal ejection using heating elements. The ink may be, for example, the ink described above. In the example illustrated in FIG. 4, the multiple ink heads 4 can respectively eject eight colors of ink. The ink heads 4 are mounted on the head support frame 31 in the carriage 300 in two arrays in the main scanning direction S. Two ink heads 4 are allocated for each color.

In the example in FIG. 4, more specifically, the ink heads 4 include a first upstream ink head 41A and a first downstream ink head 41B. These ink heads 4 eject, for example, yellow ink. The ink heads 4 also include a second upstream ink head 42A and a second downstream ink head 42B. These ink heads 4 eject, for example, magenta ink. In the same or a similar manner, two ink heads 4 that eject the same color of ink are arranged in a manner displaced from each other in the feed direction F and the main scanning direction S as illustrated in FIG. 4. With these two ink heads 4 being paired, a total of eight pairs of ink heads 4 (the first upstream ink head 41A to an eighth upstream ink head 48A and the first downstream ink head 41B to an eighth downstream ink head 48B) eject different colors of ink. The ink may be the ink included in the ink set for inkjet textile printing.

The pretreatment liquid head 5 and the post-treatment liquid head 6 are displaced from the ink heads 4 in the feed direction F. The pretreatment liquid head 5 is upstream from the ink heads 4 in the feed direction F. In the example illustrated in FIG. 4, a single pretreatment liquid head 5 is located adjacent to the left end of the arrays of the ink heads 4. In the same or a similar manner, the post-treatment liquid head 6 is downstream from the ink heads 4 in the feed direction F. In the example illustrated in FIG. 4, a single post-treatment liquid head 6 is located at the right end of the arrays of the ink heads 4. In another example of the inkjet recording apparatus, multiple pretreatment liquid heads 5 or multiple post-treatment liquid heads 6 may be arranged.

Note that a series of heads including the ink heads 4, the pretreatment liquid head 5, and the post-treatment liquid head 6 arranged in the main scanning direction S is referred to as an array of heads, or simply an array. A series of heads including the ink heads 4, the pretreatment liquid head 5, and the post-treatment liquid head 6 arranged in the feed direction F is referred to as a line of heads, or simply a line.

The pretreatment liquid head 5 ejects a pretreatment liquid for a predetermined pretreatment onto the workpiece W. The pretreatment liquid is ejected from the pretreatment liquid head 5 onto an area of the workpiece W on which no ink has been ejected from the ink heads 4. The pretreatment liquid may be the pretreatment liquid included in the ink set for inkjet textile printing.

The post-treatment liquid head 6 ejects a post-treatment liquid for a predetermined post-treatment onto the workpiece W on which ink has been deposited. The post-treatment liquid is ejected from the post-treatment liquid head 6 onto an area of the workpiece W on which ink has been ejected from the ink heads 4. The post-treatment liquid may be the post-treatment liquid included in the ink set for inkjet textile printing.

The noncolor-developing treatment liquid refers to a liquid that is not perceptible as having developed a color to the naked eye when printed on a recording medium alone. The color includes colors with zero saturation, such as black, white, and gray. Although the noncolor-developing treatment liquid is basically a transparent liquid, a liter of treatment liquid in a liquid state may appear, for example, slightly white or another color, rather than being transparent completely. Such a faint color is not perceptible as having developed a color to the naked eye when printed on a recording medium alone. Note that some type of treatment liquid printed alone on a recording medium may cause a change such as adding gloss to the recording medium, but such a change is not referred to as developing a color.

The inkjet printer 100 uses the ink, the pretreatment liquid, and the post-treatment liquid included in the ink set for inkjet textile printing to form an image with a sufficiently low occurrence of bleeding on fabric used as a recording medium.

In the example illustrated in FIGs. 2 to 4, the pretreatment liquid and the post-treatment liquid may be ejected onto substantially the entire surface of the workpiece W, or may be selectively ejected based on an image to be printed in the same manner as or in a similar manner to the ink. The pretreatment liquid, the ink, and the post-treatment liquid are ejected in this order on an area of the workpiece W on which colors are printed based on an image. In this case, the ink may have one color or multiple colors. For an area on which no color is printed, or in other words, an area on which no ink is ejected, no pretreatment liquid or no post-treatment liquid is basically ejected.

As illustrated in FIG. 4, the head support frame 31 includes openings 31H at positions of the heads. The head support frame 31 receives the ink heads 4, the pretreatment liquid head 5, and the post-treatment liquid head 6 fitted into the respective openings 31H. The nozzles on the lower end face of the heads (the ink heads 4, the pretreatment liquid head 5, and the post-treatment liquid head 6) are exposed through the respective openings 31H.

The multiple subtanks 7 are supported by, with a holding frame (not illustrated), the carriage 300 above each of the heads (the ink heads 4, the pretreatment liquid head 5, and the post-treatment liquid head 6). Each of the multiple subtanks 7 is located to correspond to one of the ink heads 4, the pretreatment liquid head 5, or the post-treatment liquid head 6. Each of the subtanks 7 receives the ink, the pretreatment liquid, or the post-treatment liquid from a main tank 90 storing the ink, the pretreatment liquid, or the post-treatment liquid and supplies the ink, the pretreatment liquid, or the post-treatment liquid to the corresponding head 4, 5, or 6. Each of the subtanks 7 is connected to the corresponding head 4, 5, or 6 with a pipe (not illustrated in FIG. 4).

In the example illustrated in FIG. 4, more specifically, the multiple subtanks 7 include, in a rear area, a first supply subtank 71A to an eighth supply subtank 78A, a pretreatment supply subtank 7FA, and a post-treatment supply subtank 7RA arranged in the main scanning direction S. The multiple subtanks 7 also include, in a front area, a first collection subtank 71B to an eighth collection subtank 78B, a pretreatment collection subtank 7FB, and a post-treatment collection subtank 7RB arranged in the main scanning direction S.

The first supply subtank 71A and the first collection subtank 71B located leftmost in the carriage 300 store, for example, yellow ink containing a pigment. In this case, the first supply subtank 71A supplies the yellow ink to the first upstream ink head 41A and the first downstream ink head 41B (each referred to as a supply destination). The first collection subtank 71B stores the yellow ink collected from the first upstream ink head 41A and the first downstream ink head 41B. Note that part of the yellow ink is ejected from the first upstream ink head 41A and the first downstream ink head 41B onto the workpiece W as described above. In the same or a similar manner, the second supply subtank 72A supplies magenta ink to the second upstream ink head 42A and the second downstream ink head 42B. The second collection subtank 72B stores the magenta ink collected from the second upstream ink head 42A and the second downstream ink head 42B. The other subtanks or the third to eighth subtanks also have the same structure and functions as or similar structure and functions to the subtanks described above.

The pretreatment supply subtank 7FA supplies the pretreatment liquid to the pretreatment liquid head 5, and the pretreatment collection subtank 7FB collects the pretreatment liquid from the pretreatment liquid head 5. The post-treatment supply subtank 7RA supplies the post-treatment liquid to the post-treatment liquid head 6, and the post-treatment collection subtank 7RB collects the post-treatment liquid from the post-treatment liquid head 6.

As described above, the inkjet printer 100 is an all-in-one printer including three types of heads, or the ink heads 4, the pretreatment liquid head 5, and the post-treatment liquid head 6, mounted on the single carriage 300. The inkjet printer 100 can integrally perform the pretreatment liquid ejection and the post-treatment liquid ejection in a textile printing process for performing inkjet printing on fabric in, for example, digital textile printing. This can simplify the textile printing process and reduce the size of the textile printing apparatus.

Note that the inkjet printer 100 performs the printing process on the workpiece W by serial printing. More specifically, for a wide workpiece W, the workpiece W cannot undergo printing while being fed continuously. With serial printing, the carriage 300 carrying the ink heads 4 for the respective colors repeatedly reciprocates in the main scanning direction S while the workpiece W is being intermittently fed in the feed direction F.

In the inkjet printer 100, the carriage 300 moving in an outgoing direction, which is one of the directions along the main scanning direction S, prints a strip image. During the main scanning in the outgoing direction, the feed of the workpiece W is stopped. The workpiece W on which the strip image has been printed is then fed forward in the feed direction F by a predetermined pitch. During the feed, the carriage 300 stays in the turn-back area 14 at the left end. After the workpiece W is fed forward, the carriage 300 turns back in a return direction opposite to the outgoing direction, as the timing belt 16 rotates in the reverse direction. During this time, the workpiece W is stationary. The carriage 300 then moves in the return direction and prints a subsequent strip image upstream from the strip image that has been printed in the movement in the outgoing direction. The same or a similar movement is repeated subsequently.

As described above, techniques in various aspects are described herein, and some of the main techniques are overviewed below.

In a first aspect, an ink set for inkjet textile printing includes a pretreatment liquid, ink, and a post-treatment liquid. The pretreatment liquid has a static surface tension higher than a static surface tension of the ink and a static surface tension of the post-treatment liquid.

In a second aspect, an ink set for inkjet textile printing is the ink set according to the first aspect in which the static surface tension of the pretreatment liquid and the static surface tension of the ink have a difference of 0.5 to 5.5 mN/m inclusive.

In a third aspect, an ink set for inkjet textile printing is the ink set according to the first aspect or the second aspect in which the static surface tension of the pretreatment liquid and the static surface tension of the post-treatment liquid have a difference of 1 to 10 mN/m inclusive.

In a fourth aspect, an ink set for inkjet textile printing is the ink set according to any one of the first to third aspects in which the static surface tension of the ink and the static surface tension of the post-treatment liquid have a difference of 0 to 5 mN/m inclusive.

In a fifth aspect, an ink set for inkjet textile printing is the ink set according to any one of the first to fourth aspects in which the static surface tension of the ink is higher than the static surface tension of the post-treatment liquid.

In a sixth aspect, an ink set for inkjet textile printing is the ink set according to any one of the first to fifth aspects in which the pretreatment liquid contains a nonionic surfactant.

In a seventh aspect, an ink set for inkjet textile printing is the ink set according to the sixth aspect in which the nonionic surfactant is at least one of an acetylene glycol surfactant or a silicone surfactant.

In an eighth aspect, an ink set for inkjet textile printing is the ink set according to the fifth aspect or the sixth aspect in which a content of the nonionic surfactant relative to a total amount of the pretreatment liquid is 0.1 to 5 mass% inclusive.

In a ninth aspect, an inkjet textile printing method includes applying the pretreatment liquid included in the ink set according to any one of the first to eighth aspects to a textile printing substrate, applying the ink included in the ink set to the textile printing substrate to which the pretreatment liquid is applied, and applying the post-treatment liquid included in the ink set to the textile printing substrate to which the ink is applied.

In a tenth aspect, an inkjet textile printing apparatus includes a pretreatment liquid head that applies the pretreatment liquid included in the ink set according to any one of the first to eighth aspects to a textile printing substrate, an ink head that applies the ink included in the ink set to the textile printing substrate to which the pretreatment liquid is applied, and a post-treatment liquid head that applies the post-treatment liquid included in the ink set to the textile printing substrate to which the ink is applied.

In the above aspects of the present invention, the ink set for inkjet textile printing, the inkjet printing method, and the inkjet textile printing apparatus allows formation of images on fabric with a sufficiently low occurrence of bleeding.

One or more embodiments of the present disclosure are described more specifically below with reference to examples. However, embodiments of the present disclosure are not limited to such examples.

### Examples

### Working Examples 1 to 11 and Comparative Examples 1 to 4

A pretreatment liquid, ink, and a post-treatment liquid used in an ink set for inkjet textile printing in the present working examples and comparative examples will first be described.

### Preparation of Pretreatment Liquid

### - Pretreatment Liquid 1

Pretreatment liquid 1 was prepared by mixing 3 parts by mass (solid content) of a water-soluble cationic polymer as a cationic compound (copolymer of diallyldimethylammonium chloride and sulfur dioxide, PAS-A-5 manufactured by Nittobo Medical Co. Ltd., weight-average molecular weight (Mw) 4000), 1 part by mass of a nonionic surfactant (ethylene oxide adduct of acetylene glycol, Surfynol 440 manufactured by Nissin Chemical Industry Co. Ltd.), 30 parts by mass of propylene glycol, and the remaining parts by mass of water, and filtering the mixture with a 5-µm filter. In other words, the formulation of pretreatment liquid 1 was 3 mass% of the cationic compound, 1 mass% of the nonionic surfactant, 30 mass% of propylene glycol, and the remaining mass% of water.

The static surface tension of pretreatment liquid 1 (static surface tension at 25 °C) was measured by the Wilhelmy method using an automatic surface tensiometer (DY-300 manufactured by Kyowa Interface Science Co., Ltd.) at a measurement temperature of 25 °C, and the result was 33.5 mN/m.

### - Pretreatment Liquid 2

Pretreatment liquid 2 was prepared in the same manner as or in a similar manner to pretreatment liquid 1 except that the content of the nonionic surfactant was changed from 1 part by mass (1 mass%) to 0.95 parts by mass (0.95 mass%).

The static surface tension of pretreatment liquid 2 (at 25 °C) measured with the above method was 34.0 mN/m.

### - Pretreatment Liquid 3

Pretreatment liquid 3 was prepared in the same manner as or in a similar manner to pretreatment liquid 1 except that the content of the nonionic surfactant content was changed from 1 part by mass (1 mass%) to 1.1 parts by mass (1.1 mass%).

The static surface tension of pretreatment liquid 3 (at 25 °C) measured with the above method was 32.0 mN/m.

### - Pretreatment Liquid 4

Pretreatment liquid 4 was prepared in the same manner as or in a similar manner to pretreatment liquid 1 except that the content of the nonionic surfactant was changed from 1 part by mass (1 mass%) to 0.85 parts by mass (0.85 mass%).

The static surface tension of pretreatment liquid 4 (at 25 °C) measured with the above method was 36.5 mN/m.

### - Pretreatment Liquid 5

Pretreatment liquid 5 was prepared in the same manner as or in a similar manner to pretreatment liquid 1 except that the content of the nonionic surfactant was changed from 1 part by mass (1 mass%) to 0.7 parts by mass (0.7 mass%).

The static surface tension of pretreatment liquid 5 (at 25 °C) measured with the above method was 40.0 mN/m.

### - Pretreatment Liquid 6

Pretreatment liquid 6 was prepared in the same manner as or in a similar manner to pretreatment liquid 1 except that the content of the nonionic surfactant was changed from 1 part by mass (by mass%) to 0.8 parts by mass (0.8 mass%).

The static surface tension of pretreatment liquid 6 (at 25 °C) measured with the above method was 37.0 mN/m.

### - Pretreatment Liquid 7

Pretreatment liquid 7 was prepared in the same manner as or in a similar manner to pretreatment liquid 1 except that the content of the nonionic surfactant was changed from 1 part by mass (1 mass%) to 1.4 parts by mass (1.4 mass%).

The static surface tension of pretreatment liquid 7 (at 25 °C) measured with the above method was 29.5 mN/m.

### - Pretreatment Liquid 8

Pretreatment liquid 8 was prepared in the same manner as or in a similar manner to pretreatment liquid 1 except that the content of the nonionic surfactant was changed from 1 part by mass (1 mass%) to 1.6 parts by mass (1.6 mass%).

The static surface tension of pretreatment liquid 8 (at 25 °C) measured with the above method was 27.5 mN/m.

### - Pretreatment Liquid 9

Pretreatment liquid 9 was prepared in the same manner as or in a similar manner to pretreatment liquid 1 except that 1 part by mass (1 mass%) of the nonionic surfactant (ethylene oxide adduct of acetylene glycol, Surfynol 440 manufactured by Nissin Chemical Industry Co. Ltd.) was replaced by 0.05 parts by mass (0.05 mass%) of another nonionic surfactant that is a silicone surfactant (polyether modified silicone, Silface SAG002 manufactured by Nissin Chemical Industry Co. Ltd.).

The static surface tension of pretreatment liquid 9 (at 25 °C) measured with the above method was 33.5 mN/m.

### - Pretreatment Liquid 10

Pretreatment liquid 10 was prepared in the same manner as or in a similar manner to pretreatment liquid 9 except that the content of the silicone surfactant was changed from 0.05 parts by mass (0.05 mass%) to 0.07 parts by mass (0.07 mass%).

The static surface tension of pretreatment liquid 10 (at 25 °C) measured with the above method was 32.0 mN/m.

### Preparation of Ink

### - Ink 1

Ink 1 was prepared by mixing 4 parts by mass (solid content) of an anionic pigment dispersion having a pigment concentration of 20 mass% (AE-2078F, C.I. Pigment Black manufactured by Sanyo Color Works, Ltd), 8 parts by mass (solid content) of a urethane dispersion having a solid content of 38 mass% (Superflex 470 manufactured by DSK Co. Ltd.), 0.9 parts by mass of a nonionic surfactant (ethylene oxide adduct of acetylene glycol, Surfynol 440 manufactured by Nissin Chemical Industry Co. Ltd.), 30 part by mass of propylene glycol, and the remaining parts by mass of water, and filtering the mixture with a 5-µm filter. In other words, the formulation of ink 1 was 4 mass% of the pigment, 8 mass% of the binder resin particles, 0.9 mass% of the nonionic surfactant, 30 mass% of propylene glycol, and the remaining mass% of water.

The static surface tension of ink 1 (at 25 °C) measured with the above method was 32.0 mN/m.

### - Ink 2

Ink 2 was prepared in the same manner as or in a similar manner to ink 1 except that the content of the nonionic surfactant was changed from 0.9 parts by mass (0.9 mass%) to 1.25 parts by mass (1.25 mass%).

The static surface tension of ink 2 (at 25 °C) measured with the above method was 29.0 mN/m.

### - Ink 3

Ink 3 was prepared in the same manner as or in a similar manner to ink 1 except that the content of the nonionic surfactant was changed from 0.9 parts by mass (0.9 mass%) to 1.05 parts by mass (1.05 mass%).

The static surface tension of ink 3 (at 25 °C) measured with the above method was 31.5 mN/m.

### - Ink 4

Ink 4 was prepared in the same manner as or in a similar manner to ink 1 except that the content of the nonionic surfactant was changed from 0.9 parts by mass (0.9 mass%) to 0.7 parts by mass (0.7 mass%).

The static surface tension of ink 4 (at 25 °C) measured with the above method was 34.5 mN/m.

### - Ink 5

Ink 5 was prepared in the same manner as or in a similar manner to ink 1 except that the content of the nonionic surfactant was changed from 0.9 parts by mass (0.9 mass%) to 1.4 parts by mass (1.4 mass%).

The static surface tension of ink 5 (at 25 °C) measured with the above method was 28.0 mN/m.

### - Ink 6

Ink 6 was prepared in the same manner as or in a similar manner to ink 1 except that the content of the nonionic surfactant was changed from 0.9 parts by mass (0.9 mass%) to 0.8 parts by mass (0.8 mass%).

The static surface tension of the ink 6 (at 25 °C) measured with the above method was 34.0 mN/m.

### - Ink 7

Ink 7 was prepared in the same manner as or in a similar manner to ink 1 except that 0.9 parts by mass (0.9 mass%) of the nonionic surfactant (ethylene oxide adduct of acetylene glycol, Surfynol 440 manufactured by Nissin Chemical Industry Co. Ltd.) were replaced by 0.06 parts by mass (0.06 mass%) of another nonionic surfactant that is a silicone surfactant (polyether modified silicone, Silface SAG002 manufactured by Nissin Chemical Industry Co. Ltd.).

The static surface tension of ink 7 (at 25 °C) measured with the above method was 32.0 mN/m.

### - Ink 8

Ink 8 was prepared in the same manner as or in a similar manner to ink 7 except that the content of the silicone surfactant was changed from 0.06 parts by mass (0.06 mass%) to 0.05 parts by mass (0.05 mass%).

The static surface tension of ink 8 (at 25 °C) measured with the above method was 34.0 mN/m.

### Preparation of Post-Treatment Liquid

### - Post-Treatment Liquid 1

Post-treatment liquid 1 was prepared by mixing 10 parts by mass (solid content) of emulsion of silicone oil having a silicone oil content of 39 mass% (POLON-MF-51 manufactured by Shin-Etsu Chemical Co. Ltd.), 30 parts by mass of propylene glycol, and the remaining parts of water, and filtering the mixture with a 5-µm filter. In other words, the formulation of post-treatment liquid 1 was 10 mass% of emulsion of the silicone oil, 30 mass% of propylene glycol, and the remaining mass% of water.

The static surface tension of post-treatment liquid 1 (at 25 °C) measured with the above method was 31.0 mN/m.

### - Post-Treatment Liquid 2

Post-treatment liquid 2 was prepared by mixing 10 parts by mass (solid content) of emulsion of silicone oil having a silicone oil content of 39 mass% (POLON-MF-51 manufactured by Shin-Etsu Chemical Co. Ltd.), 0.4 parts by mass of a nonionic surfactant (ethylene oxide adduct of acetylene glycol, Surfynol 440 manufactured by Nissin Chemical Industry Co. Ltd.), 30 parts by mass of propylene glycol, and the remaining parts by mass of water, and filtering the mixture with a 5-µm filter. In other words, the formulation of post-treatment liquid 2 was 10 mass% of emulsion of the silicone oil, 0.4 mass% of the nonionic surfactant, 30 mass% of propylene glycol, and the remaining mass% of water.

The static surface tension of post-treatment liquid 2 (at 25 °C) measured with the above method was 29.0 mN/m.

### - Post-treatment liquid 3

Post-treatment liquid 3 was prepared in the same manner as or in a similar manner to post-treatment liquid 2 except that the content of the nonionic surfactant was changed from 0.4 parts by mass (0.4 mass%) to 0.6 parts by mass (0.6 mass%).

The static surface tension of post-treatment liquid 3 (at 25 °C) measured with the above method was 28.0 mN/m.

### - Post-Treatment Liquid 4

Post-treatment liquid 4 was prepared in the same manner as or in a similar manner to post-treatment liquid 2 except that the content of the nonionic surfactant was changed from 0.4 parts by mass (0.4 mass%) to 1.1 parts by mass (1.1 mass%).

The static surface tension of post-treatment liquid 4 (at 25 °C) measured with the above method was 24.0 mN/m.

### - Post-Treatment Liquid 5

Post-treatment liquid 5 was prepared in the same manner as or in a similar manner to post-treatment liquid 2 except that the content of the nonionic surfactant was changed from 0.4 parts by mass (0.4 mass%) to 0.2 parts by mass (0.2 mass%).

The static surface tension of post-treatment liquid 5 (at 25 °C) measured with the above method was 30.0 mN/m.

### - Post-Treatment Liquid 6

Post-treatment liquid 6 was prepared in the same manner as or in a similar manner to post-treatment liquid 2 except that 0.4 parts by mass (0.4 mass%) of the nonionic surfactant (ethylene oxide adduct of acetylene glycol, Surfynol 440 manufactured by Nissin Chemical Industry Co. Ltd.) were replaced by 0.05 parts by mass (0.05 mass%) of another nonionic surfactant that is a silicone surfactant (polyether modified silicone, Silface SAG002 manufactured by Nissin Chemical Industry Co. Ltd.).

The static surface tension of post-treatment liquid 6 (at 25 °C) measured with the above method was 30.0 mN/m.

### Working Example 1

In inkjet textile printing, fabric as a printing substrate was polyester tropical fabric (manufactured by Shikisensha Co., Ltd.). The printed textiles for evaluation were produced with a flatbed printing jig (a flatbed inkjet recording apparatus corresponding to the apparatus in FIG. 1 including inkjet heads, a prototype manufactured by Kyocera Corporation) including inkjet heads (KJ4B manufactured by Kyocera Corporation) arranged in a feed direction. Pretreatment liquid 1 was introduced into a first inkjet head (downstream in the feed direction). Ink 1 was introduced into a second inkjet head. Post-treatment liquid 1 was introduced into a third inkjet head (upstream in the feed direction). Using the flatbed printing jig, 10 g/m² of the pretreatment liquid, 20 g/m² of the ink, and 5 g/m² of the post-treatment liquid were ejected from the respective heads onto the polyester tropical fabric. The inkjet textile printing was performed with a distance of 3 mm between the fabric and the inkjet heads and an inkjet head temperature of 25. The printing substrate on which the pretreatment liquid, the ink, and the post-treatment liquid were ejected was then heated at 160 °C for 3 minutes in an oven. This dried the pretreatment liquid, the ink, and the post-treatment liquid ejected onto the printing substrate, producing a printed textile in working example 1. Working Example 2

A printed textile in working example 2 was obtained as in working example 1 except that pretreatment liquid 2, ink 2, and post-treatment liquid 1 were used as the pretreatment liquid, the ink, and the post-treatment liquid.

### Working Example 3

A printed textile in working example 3 was obtained as in working example 1 except that pretreatment liquid 3, ink 3, and post-treatment liquid 1 were used as the pretreatment liquid, the ink, and the post-treatment liquid.

### Working Example 4

A printed textile in working example 4 was obtained as in working example 1 except that pretreatment liquid 4, ink 1, and post-treatment liquid 1 were used as the pretreatment liquid, the ink, and the post-treatment liquid.

### Working Example 5

A printed textile in working example 5 was obtained as in working example 1 except that pretreatment liquid 5, ink 4, and post-treatment liquid 1 were used as the pretreatment liquid, the ink, and the post-treatment liquid.

### Working Example 6

A printed textile in working example 6 was obtained as in working example 1 except that pretreatment liquid 1, ink 3, and post-treatment liquid 1 were used as the pretreatment liquid, the ink, and the post-treatment liquid.

### Working Example 7

A printed textile in working example 7 was obtained as in working example 1 except that pretreatment liquid 1, ink 1, and post-treatment liquid 2 were used as the pretreatment liquid, the ink, and the post-treatment liquid.

### Working Example 8

A printed textile in working example 8 was obtained as in working example 1 except that pretreatment liquid 6, ink 1, and post-treatment liquid 3 were used as the pretreatment liquid, the ink, and the post-treatment liquid.

### Working Example 9

A printed textile in working example 9 was obtained as in working example 1 except that pretreatment liquid 2, ink 2, and post-treatment liquid 4 were used as the pretreatment liquid, the ink, and the post-treatment liquid.

### Working Example 10

A printed textile in working example 10 was obtained as in working example 1 except that pretreatment liquid 1, ink 5, and post-treatment liquid 1 were used as the pretreatment liquid, the ink, and the post-treatment liquid.

### Working Example 11

A printed textile in working example 11 was obtained as in working example 1 except that pretreatment liquid 9, ink 7, and post-treatment liquid 1 were used as the pretreatment liquid, the ink, and the post-treatment liquid.

### Comparative Example 1

A printed textile in comparative example 1 was obtained as in working example 1 except that pretreatment liquid 3, ink 6, and post-treatment liquid 5 were used as the pretreatment liquid, the ink, and the post-treatment liquid.

### Comparative Example 2

A printed textile in comparative example 2 was obtained as in working example 1 except that pretreatment liquid 7, ink 5, and post-treatment liquid 1 were used as the pretreatment liquid, the ink, and the post-treatment liquid.

### Comparative Example 3

A printed textile in comparative example 3 was obtained as in working example 1 except that pretreatment liquid 8, ink 2, and post-treatment liquid 1 were used as the pretreatment liquid, the ink, and the post-treatment liquid.

### Comparative Example 4

A printed textile in comparative example 4 was obtained as in working example 1 except that pretreatment liquid 10, ink 8, and post-treatment liquid 6 were used as the pretreatment liquid, the ink, and the post-treatment liquid.

The printed textiles obtained in the manner described above were evaluated with the method described below.

### Evaluation on Bleeding

The obtained printed textiles were visually inspected and evaluated using the criteria below. A clear image with no perceptible bleeding was rated "5." A clear image with faintly perceptible bleeding was rated "4." An image with slightly perceptible bleeding but with no issue in practical use was rated "3." An unclear image with perceptible bleeding was rated "2." An image with notably perceptible bleeding was rated "1." In this evaluation, lower numbers indicate lower evaluation as described above (e.g., "5" is highest, and "1" is lowest). The images rated "3" to "5" were accepted whereas the images rated "1" or "2" were rejected.

The results are shown together with, for example, the combinations of the pretreatment liquids, the inks, and the post-treatment liquids.

**Table 1**

| | Pretreatment liquid | | | Ink | | | Post-treatment liquid | | | Difference in static surface tension (mN/m) | | | Rating |
|---|---|---|---|---|---|---|---|---|---|---|---|---|---|
| | Liquid No. | Surfactant (mass%) | Spre (mN/m) | Liquid No. | Surfactant (mass%) | Si (mN/m) | Liquid No. | Surfactant (mass%) | Spost (mN/m) | Spre - Si | Spre - Spost | Si - Spost | Bleedin g |
| Working example 1 | 1 | 1.00 | 33.5 | 1 | 0.90 | 32.0 | 1 | 0 | 31.0 | 1.5 | 2.5 | 1.0 | 5 |
| Working example 2 | 2 | 0.95 | 34.0 | 2 | 1.25 | 29.0 | 1 | 0 | 31.0 | 5.0 | 3.0 | -2.0 | 3 |
| Working example 3 | 3 | 1.10 | 32.0 | 3 | 1.05 | 31.5 | 1 | 0 | 31.0 | 0.5 | 1.0 | 0.5 | 5 |
| Working example 4 | 4 | 0.85 | 36.5 | 1 | 0.90 | 32.0 | 1 | 0 | 31.0 | 4.5 | 5.5 | 1.0 | 5 |
| Working example 5 | 5 | 0.70 | 40.0 | 4 | 0.70 | 34.5 | 1 | 0 | 31.0 | 5.5 | 9.0 | 3.5 | 4 |
| Working example 6 | 1 | 1.00 | 33.5 | 3 | 1.05 | 31.5 | 1 | 0 | 31.0 | 2.0 | 2.5 | 0.5 | 5 |
| Working example 7 | 1 | 1.00 | 33.5 | 1 | 0.90 | 32.0 | 2 | 0.40 | 29.0 | 1.5 | 4.5 | 3.0 | 5 |
| Working example 8 | 6 | 0.80 | 37.0 | 1 | 0.90 | 32.0 | 3 | 0.60 | 28.0 | 5.0 | 9.0 | 4.0 | 4 |
| Working example 9 | 2 | 0.95 | 34.0 | 2 | 1.25 | 29.0 | 4 | 1.10 | 24.0 | 5.0 | 10.0 | 5.0 | 4 |
| Working example 10 | 1 | 1.00 | 33.5 | 5 | 1.40 | 28.0 | 1 | 0 | 31.0 | 5.5 | 2.5 | -3.0 | 3 |
| Working example 11 | 9 | 0.05 | 33.5 | 7 | 0.06 | 32.0 | 1 | 0 | 31.0 | 1.5 | 2.5 | 1.0 | 5 |
| Comparative example 1 | 3 | 1.10 | 32.0 | 6 | 0.80 | 34.0 | 5 | 0.20 | 30.0 | -2.0 | 2.0 | 4.0 | 1 |
| Comparative example 2 | 7 | 1.40 | 29.5 | 5 | 1.40 | 28.0 | 1 | 0 | 31.0 | 1.5 | -1.5 | -3.0 | 2 |
| Comparative example 3 | 8 | 1.60 | 27.5 | 2 | 1.25 | 29.0 | 1 | 0 | 31.0 | -1.5 | -3.5 | -2.0 | 1 |
| Comparative example 4 | 10 | 0.07 | 32.0 | 8 | 0.05 | 34.0 | 6 | 0.05 | 30.0 | -2.0 | 2.0 | 4.0 | 1 |

As shown in Table 1, the ink sets of the combinations of the pretreatment liquids, the inks, and the post-treatment liquids satisfying the above relationship (Spre > Si and Spre > Spost) (working examples 1 to 11) cause less bleeding of the images formed on the fabric than the ink sets not satisfying the relationship (comparative examples 1 to 4). The ink sets of the combinations of the pretreatment liquids, the inks, and the post-treatment liquids satisfying the above relationship (Spre > Si and Spre > Spost) and also Si > Spost (working examples 1, 3 to 9, and 11) cause still less bleeding of the images than the ink sets not satisfying Si > Spost (working examples 2 and 9).

This application is based on Japanese Patent Application No. 2023-092877 filed on June 6, 2023, the contents of which are incorporated herein by reference.

To describe the present invention, the present invention has been appropriately and sufficiently described through embodiments as above. However, those skilled in the art can easily at least change or improve the above embodiments. Therefore, unless such changes or improvements made by those skilled in the art depart from the scope of the claims, such changes or improvements are construed as being included within the scope of the claims.

### INDUSTRIAL APPLICABILITY

In one or more embodiments of the present invention, the ink set for inkjet textile printing, the inkjet textile printing method, and the inkjet textile printing apparatus allow formation of images on fabric with a sufficiently lower occurrence of bleeding.

### REFERENCE SIGNS

- 3: support
- 4: ink head
- 4a: first ink head
- 4b: second ink head
- 4c: third ink head
- 4d: fourth ink head
- 5: pretreatment liquid head
- 6: post-treatment liquid head
- 10: inkjet textile printing apparatus
- 11: apparatus frame
- 12: printing area
- 13: maintenance area
- 14: turn-back area
- 15: carriage guide
- 16: timing belt
- 17: guide rail
- 20: workpiece feeder
- 21: feed roller
- 22: take-up roller
- 23: first tension roller
- 24: workpiece guide
- 25: transport roller
- 26: pinch roller
- 27: turn roller
- 28: second tension roller
- 29: platen
- 30: carriage frame
- 31: head support frame
- 32: back frame
- 41A to 48A: first to eighth upstream ink heads
- 41B to 48B: first to eighth downstream ink heads
- 7: subtank
- 7FA: pretreatment supply subtank
- 7FB: pretreatment collection subtank
- 7RA: post-treatment supply subtank
- 7RB: post-treatment collection subtank
- 71A to 78A: first to eighth supply subtanks
- 71B to 78B: first to eighth collection subtanks
- 90: main tank
- 100: inkjet printer
- 111: center frame
- 112: right frame
- 113: left frame
- 300: carriage
- F: feed direction
- M1: first motor
- M2: second motor
- P: printing substrate
- S: main scanning direction
- W: workpiece
- WA: feed roll
- WB: take-up roll

## Claims

1. An ink set for inkjet textile printing, the ink set comprising:
a pretreatment liquid;
ink; and
a post-treatment liquid,
wherein the pretreatment liquid has a static surface tension higher than a static surface tension of the ink and a static surface tension of the post-treatment liquid.

2. The ink set according to claim 1, wherein
the static surface tension of the pretreatment liquid and the static surface tension of the ink have a difference of 0.5 to 5.5 mN/m inclusive.

3. The ink set according to claim 1, wherein
the static surface tension of the pretreatment liquid and the static surface tension of the post-treatment liquid have a difference of 1 to 10 mN/m inclusive.

4. The ink set according to claim 1, wherein
the static surface tension of the ink and the static surface tension of the post-treatment liquid have a difference of 0 to 5 mN/m inclusive.

5. The ink set according to claim 1, wherein
the static surface tension of the ink is higher than the static surface tension of the post-treatment liquid.

6. The ink set according to claim 1, wherein
the pretreatment liquid contains a nonionic surfactant.

7. The ink set according to claim 6, wherein
the nonionic surfactant is at least one of an acetylene glycol surfactant or a silicone surfactant.

8. The ink set according to claim 6, wherein
a content of the nonionic surfactant relative to a total amount of the pretreatment liquid is 0.1 to 5 mass% inclusive.

9. An inkjet textile printing method, comprising:
ejecting and depositing the pretreatment liquid included in the ink set according to any one of claims 1 to 8 onto fabric;
ejecting and depositing the ink included in the ink set onto the fabric on which the pretreatment liquid is deposited; and
ejecting and depositing the post-treatment liquid included in the ink set onto the fabric on which the ink is deposited.

10. An inkjet textile printing apparatus, comprising:
a pretreatment liquid head configured to eject and deposit the pretreatment liquid included in the ink set according to any one of claims 1 to 8 onto fabric;
an ink head configured to eject and deposit the ink included in the ink set onto the fabric on which the pretreatment liquid is deposited; and
a post-treatment liquid head configured to eject and deposit the post-treatment liquid included in the ink set onto the fabric on which the ink is deposited.
